# EUROPEAN PATENT SPECIFICATION

(11) **EP 2 920 571 B1**
(45) Date of publication and mention of the grant of the patent: **08.01.2020**
(21) Application number: 13855307.8
(22) Date of filing: 18.11.2013
(51) Int. Cl.: G01N 1/31

(54) **METHOD AND APPARATUS FOR REAGENT VALIDATION IN AUTOMATED SAMPLE PROCESSING**
VERFAHREN UND VORRICHTUNG ZUR REAGENZIENBEURTEILUNG IN EINER AUTOMATISCHEN PROBENVERARBEITUNG
PROCÉDÉ ET APPAREIL PERMETTANT DE VALIDER LES RÉACTIFS UTILISÉS DANS LE CADRE D'UN TRAITEMENT AUTOMATISÉ D'ÉCHANTILLONS

(30) Priority: 16.11.2012 US 727452 P; 16.11.2012 DK 201270710
(43) Date of publication of application: 23.09.2015
(73) Proprietor: Dako Denmark A/S, 2600 Glostrup (DK)
(72) Inventor: WENDELBOE, Helle Grann, DK-2880 Bagsværd (DK); DEVORE, Scott, Santa Barbara, California 93101 (US)
(74) Representative: Grünecker Patent- und Rechtsanwälte PartG mbB
(86) International application number: PCT/DK2013/050385
(87) International publication number: WO 2014/075693

(56) References cited:
- WO-A1-03/100389
- WO-A2-03/045560
- WO-A2-2004/059284
- US-A- 5 839 091
- US-A1- 2006 172 426
- US-A1- 2006 172 426
- US-A1- 2008 011 106
- US-A1- 2010 099 199
- US-A1- 2010 210 019
- NOWATZKE W. ET AL.: 'Best Practices During Bioanalytical Method Validation for the Characterization of Assay Reagents and the Evaluation of Analyte Stability in Assay Standards, Quality Control, and Study Samples''.' THE AAPS JOURNAL vol. 9, no. 2, 2007, pages E117 - E122

## Description

### Technical Field

The present invention relates to methods and apparatuses for automatic processing of samples accommodated on a carrier member, such as a microscopic sample carrier. Sample processing steps may include applying a predetermined amount of reagents in a sequence according to a processing protocol. Methods and apparatuses described herein may be utilized to validate and troubleshoot the performance of reagents.

The biological sample may suitably be selected from histological material, e.g. tissue specimens, including formalin fixed and paraffin embedded material, cytological material, fine needle aspirates, ceil smears, exfoliative cytological specimens, touch preparations, bone marrow specimens, sputum samples, expectorates, oral swabs, laryngeal swabs, vaginal swabs, bronchial aspirates, bronchial lavage, gastric lavage, and body fluids. Such may be subjected to various treatments.

### Background

Sample processing in immunohistochemical (IHC) applications and in other chemical and biological analyses may require one or a number of various processing sequences or protocols as part of an analysis of one or more samples. The sample processing sequences or protocols may be defined by the individual or organization requesting an analysis, such as a pathologist or histologist of a hospital, and may be further defined by the dictates of a particular analysis to be performed.

In preparation for sample analysis, a biological sample may be acquired by known sample acquisition techniques and may comprise, for example in IHC applications, tissues generally or even in some applications one or a plurality of isolated cells, such as in microarray samples, and may be presented on a sample carrier such as a microscope sample carrier. Furthermore, the sample may be presented on the carrier variously and potentially in some form of preservation. As one example, a human biopsy sample may be fixed and embedded in a suitable media like paraffin or epon, before being mounted onto a carrier. The sample may be treated according to the protocol, which may include the following non-limiting procedural steps; baking, deparaffination, antigen retrieval, denaturing, washing, incubation with various immunological reagents, molecular probes or stains, strigency wash or counterstaining. US 2010/210019 A1 relates to a sample analyzer comprising a reagent container holder; a measurement unit; and an information processing unit configured to perform operations comprising: controlling the measurement unit so as to start the successive measurement of the plurality of samples; determining whether or not to switch from a first reagent container to a second reagent container; controlling the measurement unit so as to suspend the start of measuring the next sample, to measure a quality control measurement sample prepared from the reagent contained in the second reagent container, when determined to switch from the first reagent container to the second reagent container; and controlling the measurement unit so as to start the aspiration of the next sample when an analysis result of the quality control measurement sample meets a predetermined condition.
US 2010/099199 A1 discloses a method for determining reagent quality in a device having multiple treatment stations for the treatment of at least one of cytological and histological prepared specimens and an apparatus for performing said method. The method comprises providing a carrier element that comprises at least one test material; transferring and treating the carrier element having test material according to a predefined sequence in a plurality of treatment stations together with the specimens; and evaluating the test material by means of an evaluation device after treatment in the last treatment station in sequence.
US 2006/172426 A1 refers to systems and methods of sample processing and temperature control. It specifically provides temperature control in relation to sample processing systems including sample processing systems, sample carrier temperature regulation systems, reagent temperature regulation systems, sample processing control systems, and temperature regulation devices, in particular with applicability of immunohistochemistry.
US 2008/011106 A1 discloses a sample analyzer comprising a first holding section; a second holding section, a dispenser for dispensing a reagent; analyzing means for analyzing a measurement sample; first receiving means for receiving a replacement instruction; second receiving means for receiving an order including a sample analysis item; and control means for controlling the dispenser.

### SUMMARY

The automated staining apparatus of the present invention is defined in independent claim 1. The method of the present invention is defined in independent claim 7. Preferred embodiments are defined in the dependent claims. An automated staining apparatus according to some examples, not part of the present invention, may include a first reagent section configured to contain a first plurality of reagent containers, a second reagent section configured to contain a second plurality of reagent containers, a first slide section configured to contain a first plurality of slides, a second slide section configured to contain a second plurality of slides, a robotic element configured to perform sample processing operation, and a sample processing controller configured to control the robotic element according to a processing protocol. The sample processing controller may control the robotic element to perform processing steps according to the processing protocol on the first plurality of slides using reagents obtained from the first plurality of reagent containers and not from the second plurality of reagent containers. The sample processing controller may control the robotic element to perform processing steps according to the processing protocol on the second plurality of slides using 5 reagents obtained from the second plurality of reagent containers and not from the first plurality of reagent containers.

An automated staining apparatus according to another example, not part of the present invention, may include a first reagent section configured to contain at least one reagent container, a second reagent section configured to contain at least one 10 reagent container, a first slide section configured to contain a first slide, a second slide section configured to contain a second slide, a robotic element configured to perform sample processing operations, and a sample processing controller configured to control the robotic element according to a processing protocol. The sample processing controller may control the robotic element to obtain a first reagent from the at least one reagent container positioned in the first reagent section and to dispense the first reagent on a first slide positioned in a first slide section and not on a second slide positioned in a second slide section. The sample processing controller may control the robotic element to obtain a second reagent from the at least one reagent container positioned in the second reagent section and to dispense the second reagent on a second slide positioned in a second slide section and not on a first slide positioned in a first slide section.

According to another example, not part of the present invention, an automated staining apparatus may include a reagent section configured to contain a plurality of reagent containers, a slide section configured to contain a plurality of sample carriers, a robotic element configured to perform sample processing operations and a sample processing controller. The sample processing controller may be configured to control the robotic element according to a processing protocol. The automated staining apparatus may further include a first portion of the plurality of reagent containers designated as a first reagent group, a first portion of the plurality of sample carriers designated as a first sample carrier group corresponding to the first reagent group, a second portion of the plurality of reagent containers designated as a second reagent group, and a second portion of the plurality of sample carriers designated as a second sample carrier group corresponding to the second reagent group. The sample processing controller may control the robotic element to perform processing steps according to the processing protocol on the first sample carrier group and second sample carrier group using reagents obtained from corresponding reagent groups and not from non-corresponding reagent groups.

In some examples, not part of the present invention, the at least one group of the plurality of sample carriers corresponding to the at least one group of the plurality of reagent containers may include a plurality of sample carrier groups, each corresponding to at least one of a plurality of reagent container groups. In further examples, the plurality of sample carrier groups may each be designated as corresponding to a universal reagent container group from among the plurality of reagent container groups.

In an additional example, not part of the present invention, an automated staining apparatus includes a reagent section configured to contain a plurality of reagent containers, a slide section configured to contain a plurality of sample carriers, a robotic element configured to perform sample processing operations and a sample processing controller. The sample processing controller may be configured to designate at least one group of the plurality of sample carriers as corresponding to at least one group of the plurality of reagent containers according to a grouping plan, and to control the robotic element to perform processing steps according to a processing protocol on the at least one group of the plurality of sample carriers using reagents obtained from the corresponding at least one group of the plurality of reagent containers.

According to a further example, not part of the present invention, a method of performing automatic sample processing operations on an automatic sample processing apparatus including a plurality of sample carriers, a plurality of reagent containers, and a robotic processing element, may include designating at least one group from among the plurality of sample carriers as corresponding to at least one group from among the plurality of reagent containers according to a grouping plan. A method according to this example may further include controlling the robotic processing element to perform processing steps according to a processing protocol on the at least one group of the plurality of sample carriers using reagents obtained from the corresponding at least one group of the plurality of reagent containers and not from a non-corresponding group of reagent containers. In some examples, not part of the present invention, a first group of sample carriers may correspond to a first group of reagent containers and second group of sample carriers may correspond to a second group of reagent containers, and the method may further include validating the second group of reagent containers by comparing results of the processing protocol carried out on the first group of sample carriers using reagents obtained from the first group of reagent containers and not from the second group of reagent containers to results of the processing protocol carried out on the second group of sample carriers using reagents obtained from the second group of reagent containers and not from the first group of reagent containers.

### BRIEF DESCRIPTION OF THE DRAWINGS

The accompanying drawings, which are incorporated in and constitute a part of this specification, illustrate several embodiments of the disclosure and, together with the description, serve to explain the principles of the embodiments disclosed herein.
FIG. 1a is a schematic perspective view of a staining apparatus according to one example of the invention.
Fig. 1b depicts an automatic sample processing apparatus according to one example of the invention.
Fig. 1c depicts the interior of an automatic sample processing apparatus according to one example of the invention.
Fig. 2a is a schematic depiction of an interior layout of a processing area of an exemplary automatic sample processing apparatus.
Figs. 2b-2e depict exemplary virtual configurations of an automatic sample processing apparatus.
Fig. 3 illustrates an exemplary network of automated sample processing systems and sample processing system managers.

### DESCRIPTION OF THE EMBODIMENTS

In automated sample processing systems such as those described herein, large numbers of samples may be processed simultaneously. In some examples, the samples may be processed in a batch mode, i.e. all samples and reagents to be used during sample processing are loaded into the system prior to processing and the system completes processing of all samples prior to removal or addition of samples or reagents.

In other examples, the sample processing systems are adapted to permit continuous workflow processing of samples, i.e. as some samples are completed with processing, they may be removed without interrupting the ongoing processing of samples remaining in the system, and new samples may be added to the system without interrupting the ongoing processing of samples remaining in the system. This ongoing processing may also require the replacement and/or replenishment of reagents without interrupting the ongoing processing.

With either batch sample processing systems or continuous workflow sample processing systems, it may be desirable to have more than one container of a specific type of reagent on board so that as that type of reagent in a first container is dispensed and thus depleted, a second container of the same type of reagent may be accessed to continue processing.

In some earlier sample processing systems, when two or more containers of the same reagent type were loaded onto a system, the system would continue to dispense from the first container until the level of reagent in the first container fell below a predetermined level at which point the system would begin to dispense from the second container.

Prior to staining patient specimens, laboratories often validate new reagents or new lots of reagents to be able to determine with certainty that the sample processing system and the reagents produce expected results. As used herein, the term "lot" of reagents may refer to any grouping of reagents or reagent containers, such as by production lot, shipment, laboratory preparation, serial number, etc. Increasingly, regulatory bodies and Industry guidelines require or recommend reagent validation, whether it be when a new production lot, new shipment, etc., of reagents is introduced to a sample processing system.

In the processing method described above, wherein reagents in a first container are depleted prior to dispensing reagents from a second container, validation on-board the system may be difficult, even though such a system may be configured to record the origin of reagents used to process a particular sample. If control slides are used to compare results from a first reagent to a second reagent, it may be difficult to determine with a certainty, ahead of time, when the system will switch from one reagent container to the next. If control slides are not used, inherent variations within differing tissue samples may make it difficult to compare results.

Methods and apparatuses disclosed herein may be utilized to facilitate the validation of a reagent newly introduced to a sample processing apparatus.

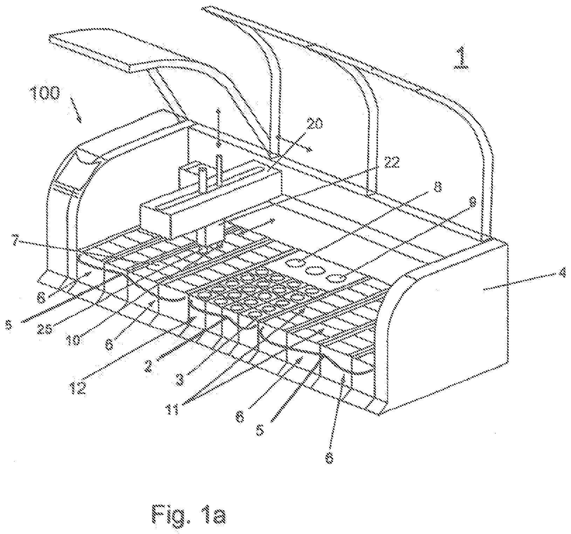

Fig. 1A illustrates an exemplary embodiment of an automated staining apparatus. A staining apparatus 1 may include a housing 4, a reagent section 2 configured to contain a plurality of reagent containers 3, and sample carrier sections 5 configured to contain a plurality of sample carriers. Within reagent section 2, reagent containers 3 may be arranged within sliding reagent racks 12, configured to pull out from staining apparatus 1 to provide access to reagent containers 3. Within sample carrier sections 5, a plurality of separate sample carrier assemblies 11 may be located. Sample carrier assemblies 11 may be configured to accommodate a plurality of sample carriers 7, and may be configured for removal from staining apparatus 1. In some embodiments, sample carrier assemblies 11 may be located within sample carrier racks 6, which may be configured to pull out from staining apparatus 1 to provide access to sample carriers 7. Staining apparatus 1 may include any a plurality of reagent sections 2, arranged in any suitable fashion within staining apparatus 1. Staining apparatus 1 may include any a plurality of sample carrier sections 5, arranged in any suitable fashion within staining apparatus 1.

A sample carrier may be any suitable solid or semi solid support for the biological sample. For example, the support may be a microscope slide, a membrane, a filter, a polymer sample carrier, a chamber sample carrier, a dish, or a petridish.

Multiple sample carrier racks 6 allow for one or a plurality of sample processing protocols to be performed by the system at the same time. Some conventional sample processing systems may be limited to processing sequences for an entire batch of carriers within the system. In the embodiments shown, however, in part by providing a plurality of sample carrier racks 6 and sample carrier assemblies 11, multiple batch processing may be permitted, including real-time or adaptive capabilities for multiple batch processing, as further described below.

Indicator elements may be provided to indicate a status of the sample carrier racks 6 and the sliding reagent racks 12, and the carriers or materials within each rack for an operator of the system. In one example, visual indicators, such as light emitting diodes in preferred embodiments, indicate if a rack is available during operation of the sample processing system, and may indicate conditions such as a locked or open condition of a corresponding rack, carrier capacity status of the rack or of a sample carrier assembly 11 within the rack, reagent status within the rack, and chemical status of the sample processing system, such as reagent loading status or capacity. A warning indication may be given by the indicator elements, as well as other indicative signals. One or a plurality of sensors may be utilized to determine the status of the rack as indicated by the Indicator elements and to further provide processing status as further described below. Furthermore, adaptive scheduling of reagent and sample carrier insertion and removal into the system may be accommodated on an on-going basis throughout operation of the sample processing system.

A sensor may be provided in some examples that may automatically identify information from one or more sample carriers 7. In some examples, protocol information may be provided by an adaptive sample processing controller. The sample processing system may process one or more sample carriers 7, or one or more batches of sample carriers 7, concurrently, sequentially, or in any other temporal fashion, potentially in accordance with protocol information provided by a sample carrier having a sample or provided by the adaptive sample processing controller. Sample batches or individual sample carriers 7 may be inserted or removed during processing protocol steps by the control and monitoring accomplished by the adaptive sample processing controller.

In some examples, the system may comprise independent sample carrier staining modules, such as rack assemblies 6. Throughput may be based on time to first result with the system allowing access to completed sample carriers 7 as soon as a staining module has completed the scheduled staining tasks. The multiple independent staining modules may allow for both continuous and batch processing of sample carriers 7. Additionally, each independent staining module may also allow for the independent pre-treatment and staining of each sample carder. A carrier rack assembly 11 may be used to introduce sample carriers 7 to be processed into the drawer 6, the drawer, carrier rack assembly 11, and components thereof forming a stain module. The sample carriers 7 may occupy one or more positions of the carrier rack assembly 11, such as at carrier retention devices, up to the capacity of the carrier rack assembly 11 with the potential for each sample carrier being processed independently of other sample carriers 7 configured with carrier rack assembly 11. Examples of the stain modules, drawers, rack assemblies, and components thereof are also shown in Figure 1a. Figure 1a also provides other examples of system features, such as an embodiment of the arm 20 and the component features of the arm.

Carrier rack assemblies 11 having one or more sample carriers 7 may be introduced into the staining modules by introduction info sample carrier racks 6 one at a time or in any combination until all staining modules are occupied. There may be no restrictions as to the order, number or timing of when the carrier rack assemblies 11 are introduced into the system, the system allowing for adaptive scheduling of sample loading. Staining modules, and in some examples the sample carrier racks 6 of the staining modules, will lock out access to the sample carriers 7 during the processing period and may release them to the operator upon completion of the staining process on the last sample carrier. In some examples, the order in which the carrier rack assemblies 11 are released is dependent on the time required to process the last sample carrier of the rack assembly. Sample carriers 7 may be processed in the most time efficient manner independently of the order to which they were introduced into the system.

A robotic element 20 to move a probe 10 in X and Y (as well as Z) direction as Indicated by the arrows X and Y may be provided above the frame 4 of the staining apparatus. The robotic element 20 may therefore position the probe 10 above all reagent containers 3 as well as above all sample carriers 7, and may further operate the probe 10 to aspirate portions of reagent contained in any of the vials 3, to transfer the portion of reagent and apply it to any of the sample carriers 7 in order to perform sample processing operations, such as providing a selected staining or treatment of the sample on each sample carrier 7. Robotic element 20 may be directed by an adaptive sample processing controller. Robotic element 20 may be directed according to a processing protocol and a validation protocol, described in more detail below. In alternate examples, robotic element 20 may be configured for other sample processing operations, such as sample carrier transport, for example.

As shown in FIG, 1, probe 10 may be accommodated in a robotic head 22 and may be manipulated by the robotic element 20. Probe 10 may be raised to an upper position (in a Z direction) where it is clear of containers 3 underneath the probe 10, but robotic element 20 includes means in the robotic head 22 for lowering the probe 10 in order to dip the probe tip into the content of a selected reagent container 3 and to aspirate a selected amount of reagent for the selected staining or sample processing operation. Robotic head 22 may also be provided with a CCD camera 25, in some examples configured to point downwards. The camera may be utilized to determine status information of the sample carriers and the reagent containers and other features of the apparatus in the work area, for example reading information which may or may not be encrypted, that is provided on a reagent container to determine the reagent type and the reagent location within the system. The camera may also determine status of the tissue sample carriers, for example the location of a particular sample carrier, informational indicia, such as which may be converted into an encrypted format, that indicate information about the tissue sample presented on the sample carrier or the processing protocol to be performed.

The staining apparatus 1 of the present example may further include a probe washing station 8 and a reagent mixer 9. Robotic element 20 may be further configured to transfer the probe 10 to the washing station 8 as well as to the reagent mixer 9.

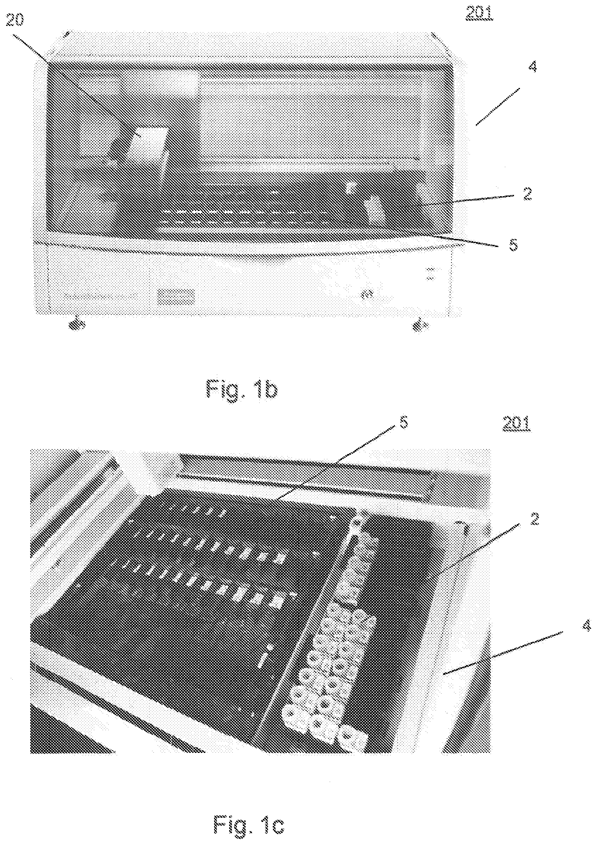

Fig. 1b depicts an exemplary automatic sample processing apparatus 201 configured for batch processing. Automatic sample processing apparatus 201 may include, for example, a housing 4, a slide section 5, a reagent section 2, and a robotic processing element 20. Automatic sample processing apparatus 201 may further include any of the features described above with respect to automatic sample processing apparatus 1.

Fig. 1c depicts the interior of an automatic sample processing apparatus 201 consistent with the present disclosure. Fig. 1c displays a more detailed view of a sample processing area of automatic sample processing apparatus 201, including a slide section 5, and a reagent section 2 configured to contain reagent containers 3.

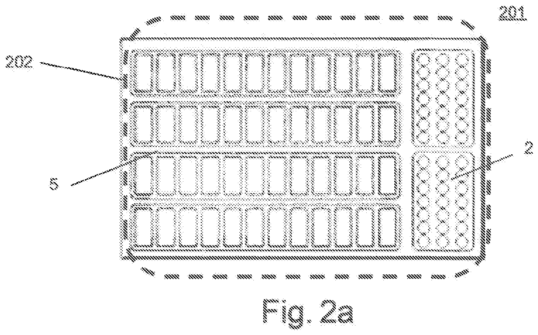

Fig, 2a is a schematic depiction of an interior layout of a processing area of automatic sample processing apparatus 201. Fig. 2a depicts a schematic of the interior layout of apparatus 201 in a standard processing mode, wherein the entirety of the processing area of automatic sample processing apparatus 201 is included in a single work space 202. In a standard processing mode, automatic sample processing apparatus 201 selects a reagent container 3 from which to draw reagents based on the depletion levels of the reagent containers 3. When a first reagent container 3 is depleted, the system begins to draw reagents from a second full reagent container 3. If no full reagent containers 3 are on board, the system may prompt a user to provide one. As discussed above, this processing method may make validation of the reagent contained in the new, full reagent container 3 difficult to perform.

In some embodiments consistent with the present disclosure, sample processing controller 100 may be configured to operate an automated sample processing apparatus in a virtual split run mode. The operation of a virtual split run mode is described below, with respect to Figs. 2a-2e. While this disclosure describes a virtual split run mode as performed on a hatch processing apparatus such as that of sample processing apparatus 201, it is understood that the techniques and methods described may also be applied to a continuous processing apparatus, such as automatic sample processing apparatus 1.

In a virtual split run mode, sample processing controller 100 may split the loaded sample carriers 7 and reagent containers 3 into various groupings in order to perform various tasks, including validation and troubleshooting tasks. The virtual split run mode divides sample processing apparatus 201 into multiple virtual processing apparatuses 301, each having a virtual work space 302. Each virtual processing apparatus 301 may then be operated by sample processing controller 100 as if it were separate from other virtual processing apparatuses 301 included in the same physical sample processing apparatus 201. That is, each virtual processing apparatus 301 may operate as a stand-alone processing apparatus. Virtual processing apparatuses 301 located in the same physical sample processing apparatus 201 may share common resources, such as robotic processing element 20 and housing 4. A virtual processing apparatus 301 may include at least one group of sample carriers 7 and at least one corresponding group of reagent containers 3.

The various sample carrier and reagent container groupings may be strictly virtual having no correlation with the actual spatial location of grouped sample carriers 7 and reagent containers 3. The various groupings may also correspond to spatial locations, wherein collocated sample carriers 7 or reagent containers 3 are designated as belonging to a specific grouping. Virtual split run mode groupings may be utilized to validate a new lot of reagents against the known properties of a currently used lot of reagents. Virtual split run mode groupings may also be utilized to troubleshoot the performance of a sample- processing apparatus 201. For example to detect compromised reagents. Further details regarding the operation of a virtual split run mode are provided below.

In some embodiments consistent with the split run mode of the present disclosure, sample processing apparatus 201 may include a sample processing controller 100 configured to designate at least one group of a plurality of sample carriers 7 as corresponding to at least one group of a plurality of reagent containers 3 according to a grouping plan. Sample processing apparatus 201 may be configured to contain any number of sample carriers 7 and any number of reagent containers 3.

Sample carriers 7 contained by sample processing apparatus 201 may be divided into one or more sample carrier groups 107 according to a grouping plan. Each sample carrier group 107 may include one or more sample carrier 7. The sample carriers 7 in a particular sample carrier group 107 may be located together in a same area of sample processing apparatus 201, and they may be scattered throughout sample processing apparatus 201. Sample processing controller 100 may be programmed to remember the locations of the sample carriers 7 designated as members of a particular sample carrier group 107. Sample processing controller 100 may divide sample carriers 7 into any number of sample carrier groups 107, and the sample carrier groups 107 may be distinct from each other or may overlap.

Similarly, reagent containers 3 contained in staining apparatus may also be divided into one or more reagent container groups 103 according to a grouping plan. Each reagent container group 103 may include one or more reagent container 3. The reagent containers 3 in a particular reagent container group 103 may be located together in a same area of sample processing apparatus 201, and they may be scattered throughout sample processing apparatus 201. Sample processing controller 100 may be programmed to remember the locations of the reagent containers 3 designated as members of a particular reagent container group 103. Sample processing controller 100 may divide reagent containers 3 into any number of reagent container groups 103, and the reagent container groups 103 may be distinct from each other or may overlap.

Each sample carrier group 107 may be designated to correspond to one or more reagent container groups 103. For example, a group of twenty sample carriers 7 may be designated as corresponding to a group of fifteen reagent containers 3. During sample processing, sample processing controller 100 may then control robotic element 20 to perform processing steps according to the processing protocol on a sample carrier group 107 using reagents obtained from a corresponding reagent container group 103 and not from any non-corresponding reagent container groups 103. Any number of sample carrier groups 107 and any number of reagent container groups 103 may be established.

Furthermore, a sample carrier group 107 may be designated as corresponding to more than one reagent container group 103. For example, sample processing controller 100 may designate a number of reagent containers 103 as belonging to a universal reagent container group 133, to which all designated sample carrier groups 107 may correspond. Thus, during operation, reagents obtained from a universal reagent container group 133 may be used during sample processing of all sample carriers 107 located in sample processing apparatus 201. Conversely, multiple sample carrier groups 107 may be designated as corresponding to a single reagent container group 103. Thus, because one to one correspondences are not required, it is not necessary that a number of sample carrier groups 107 equal a number of reagent container groups 103.

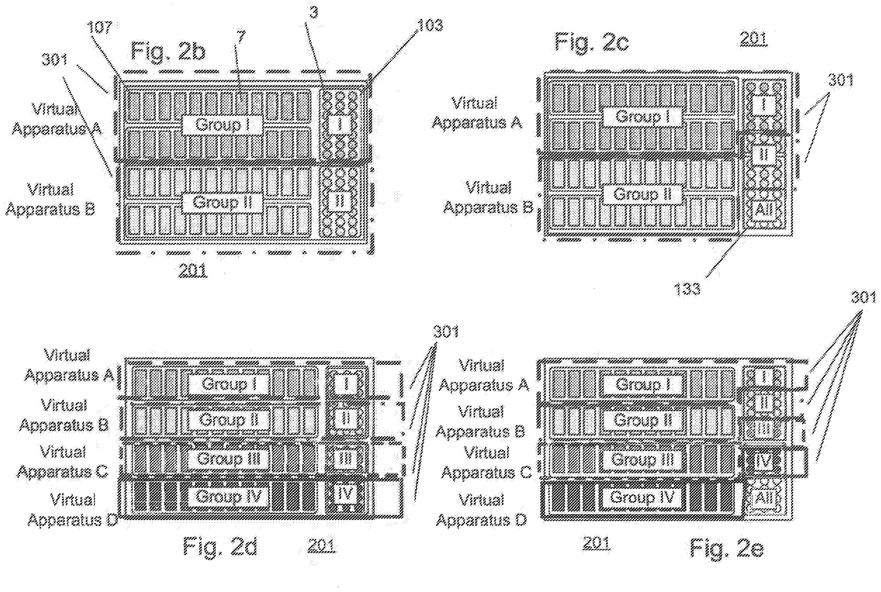

Fig. 2a depicts a schematic of the interior layout of apparatus 201 in a standard processing mode, while Figs. 2b-2e illustrate the interior layout of apparatus 201 overlaid with sample carrier and reagent container groupings of a virtual split run mode. Figs. 2b and 2d illustrate an embodiment having one to one correspondences between sample carrier groups 107 and reagent container groups 103. Fig. 2b illustrates the division of sample processing apparatus 201 into two virtual processing apparatuses 301. Virtual processing apparatus A includes sample carrier Group I and reagent container Group I, while virtual processing apparatus B includes sample carrier Group II and reagent container Group II. In this example, reagents obtained from the reagent containers of Group I may be used with sample carriers of Group I and not with sample carriers of Group II. Reagents obtained from the reagent containers of Group H may be used with sample carriers of Group II and not with sample carriers of Group 1. Thus, virtual processing apparatus A and virtual processing apparatus B may operate as individual fully functional sample processing apparatuses. Fig. 2d illustrates a split run mode set-up including sample carrier Groups I II III, and IV, each having a one to one correspondence with corresponding reagent container Groups I, II, III, and IV. These correspondences divide sample processing apparatus 201 into virtual sample processing apparatus A, including sample carriers and reagent containers of Group I, virtual sample processing apparatus B, including sample carriers and reagent containers of Group II, virtual sample processing apparatus C, including sample carriers and reagent containers of Group III, and virtual sample processing apparatus D, including sample carriers and reagent containers of Group IV. In the embodiments of a virtual split run mode Illustrated in Figs 2b and 2d, reagents used for processing steps performed on a sample carrier in any sample carrier group 107 would only be obtained from the corresponding reagent container group 103.

Figs. 2c and 2e illustrate virtual split run mode embodiments including a universal reagent container group 133. In these modes, reagents used for processing steps performed on a sample carrier group 107 would be obtained from reagent containers 103 from either the corresponding reagent container group 103 or the universal reagent group 133.

By designating specific reagents for use with specific slides, the split run mode may be useful for performing validation or troubleshooting runs. For example, an embodiment for performing a validation run may operate as follows. A new lot of reagents, lot B, may be obtained for use in the automatic sample processing apparatus. A current lot of reagents, lot A, may be known to produce valid results in the automatic sample processing apparatus. The processing space of the automatic sample processing apparatus may be divided as shown in Fig. 2b, with two virtual sample processing apparatuses A and B each of sample carriers 7 and reagent containers 3. In this example, virtual sample processing apparatus A may correspond to the existing reagent lot A and virtual sample processing apparatus B may correspond to the new reagent lot B. Sample controller 100 may then direct robotic element 20 to perform an identical processing protocol on sample carriers of Group I and sample carriers of Group II, using only reagents from the corresponding Group. When the sample processing is complete, results from Group I, using reagents from lot A, known to produce valid results, may be compared to the results of Group II, using reagents from lot B, of unknown validity. Depending on the comparison of results, the reagents of lot B may be considered to be validated. For example, if the Group I results are similar to the Group II results, lot 13 reagents may then be considered to produce valid results. Alternatively, if the Group I results differ from the Group II results, lot B reagents may require further testing, or may be considered to produce Invalid results. In this fashion, utilizing a split run mode may permit the efficient validation of newly added reagents. In additional embodiments, more than one new lot of reagents may be validated at once, for example by dividing the sample carriers and reagents into more than two groups, as is illustrated in Fig. 2d. In additional embodiments, control sample carriers having samples expected to produce similar results may be introduced into virtual sample processing apparatuses A and B to facilitate the reagent validation.

Split run processing with an automated sample processing apparatus may also be used to troubleshoot the performance of reagents that may appear to be producing poor results. For example, reagents may degrade over time or become contaminated through user error. In a conventional sample processing apparatus, it may be impossible or difficult to determine the affected reagents, and it may be necessary to individually test each reagent container, or even to discard all reagent containers. If anomalous results are detected in any of the sample carriers 7 processed, utilizing a split run mode in an automated sample processing apparatus may permit a user to isolate the affected reagent lot. Similar to the validation methods discussed above, sample carriers 7 and reagent containers 3 may be divided into separate sample carrier groups 107 and reagent container groups 103 belonging to different virtual sample processing apparatuses 301. By dividing the groups prior to running a processing protocol, it may be determined that the reagent container group 103 corresponding to the sample carrier group 107 showing anomalous results may contain a compromised reagent. In some embodiments, reagent container groups 103 may be arranged such that most of the reagent containers 3 are included in a universal reagent group 133, and only a single reagent container 3 is included in each of at least one other reagent container group 103. For example, when validating a first reagent container 3 against a second reagent container 3, a virtual split run mode may be set up with three reagent container groups 103: a first reagent, container group 103 consisting of the first reagent container 3, a second reagent container group 103 consisting of the second reagent container 3, and a third universal reagent container group 133 consisting of all other reagent containers 3. Such an arrangement may facilitate validation or troubleshooting of the first and second reagent containers 3. Thus, reagent container groups 103 may be as small as one reagent container 3. Similarly, in some embodiments, sample carrier groups 107 may be as small as one sample carrier 7. For example, when a virtual split run mode is implemented on a continuous processing apparatus, sample controller 100 may be configured to designate sample carriers 7 as belonging to specific sample carrier groups 103 as they are introduced info the processing apparatus. In some embodiments, these newly introduced sample carriers 7 may be designated as the only members of a sample carrier group 103.

Additional examples consistent with the present disclosure may include the use of a virtual split run mode to perform other tasks in addition to validation and troubleshooting. For example, a virtual split run mode may be used to divide a sample processing apparatus into separate virtual processing apparatuses corresponding to individual patient cases. In another example, a virtual split run mode may be used to compare the efficacy of reagents from different manufacturers, of different concentrations, etc. In addition to the exemplary uses described herein, persons of skill in the art will recognize additional uses and advantage of the disclosed virtual split run mode methods and apparatuses. Sample carrier groups 107 and reagent container groups 103 may be organized in any suitable way for gathering performance and validation data about automated sample processing apparatus 1 and the reagents and samples contained therein. In some embodiments, it may be advantageous to designate sample carrier groups 107 or reagent container groups 103 that overlap, wherein at least one sample carrier 7 or at least one reagent container 3 is designated as a member of more than one sample carrier group 107 or reagent container group 103.

In some examples of the system, sample processing controller 100 may be configured to maintain detailed records of the origin of reagents used for each sample processed. For example, sample processing controller may be configured to record the production lot, shipment, and even individual reagent container 3 from which the reagents used on a particular sample came from. Such records may be maintained in a database for later searching. For example, if a reagent container 3 is discovered at any point to produce poor or invalid results, all previous samples processed with reagents obtained from that reagent container 3 may be readily identified.

In some examples of the system, sample processing controller 100 may be configured to operate a virtual split run mode in adherence to regulatory requirements and guidelines. Where regulatory bodies enforce patterns of use with respect to certain reagents and assays, a sample processing controller may be configured by a user to conform to these regulations in conjunction with the virtual split run mode. For example, where a regulated assay kit requires that reagents packaged together he used together, the sample processing controller may be configured so as not to divide these reagents into different reagent container groups 103 in a virtual split run mode.

As described above, through the use of a plurality of sliding reagent racks 12 and sample carrier rack assemblies 6, reagent containers 3 and sample carriers 7 may be inserted and removed from automated sample processing apparatus 1 during on-going processing, without interrupting the processing (including, for example, reagent dispensing) of sample carriers 7 that remain in automated sample processing apparatus 1. These features may also be utilized during split run mode operations, permitting the insertion or removal of sample carriers 7 and reagent containers 3 belonging to specific sample carrier groups 107 and reagent container groups 103. Sample processing controller 100 may, for example, prompt a user to insert or remove specific sample carriers 7 or reagent containers 3 according to a processing protocol and a grouping plan.

As described above, sample processing controller 100 may be configured to control the processing of the various samples of automated sample processing apparatus 1 and may also be configured to monitor the ongoing processing. Sample processing controller 100 may also be configured to establish a network connection to communicate information about processing performed on or to be performed on automated sample processing apparatus 1. For example, in some embodiments, sample processing controller 100 may be configured to receive, via a network, a processing protocol and/or a grouping plan. In some embodiments, sample processing controller 100 may be configured to communicate with a sample processing system manager located on a server. A sample processing system manager may be configured to store information about automated sample processing apparatus 1 as well as other sample processing systems 101. Such information may he shared between sample processing systems to track and validate the performance of reagents that may be loaded into different sample processing systems 101. For example, if a shipment of reagents sharing the same manufacturing run details is split between multiple sample processing systems and a reagent from that lot is found to introduce invalid processing results, a system manager may be able to notify the users of other sample processing systems 101 that have loaded reagents from the suspect lot.

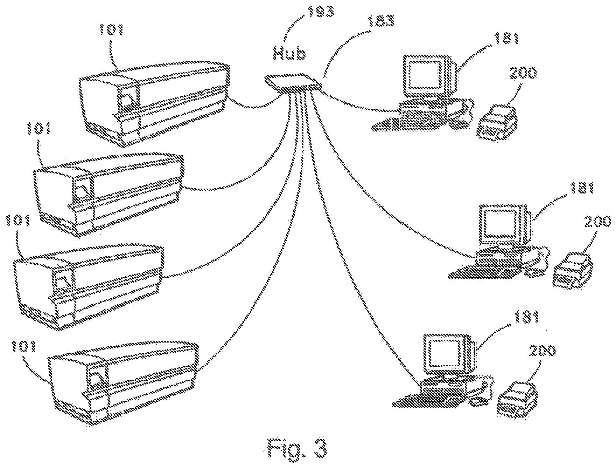

An exemplary network of sample processing systems 101 and processing system managers 181 is illustrated in Fig. 3. A sample processing system manager, such as a computer server may be connected with a number of individual sample processing systems 101. In such a network, each of sample processing systems 101 may be configured to run in a virtual split run mode as described herein. In some examples consistent with the present disclosure, a virtual sample processing apparatus 301 may be divided across multiple sample processing systems 101. That is, the sample carriers 7 and reagent containers 3 of a virtual sample processing apparatus 301 may be located on different physical sample processing systems 101.

Sample processing systems 101 may represent automated slide stainers or even stand-alone automated slide processing systems such that they are fully capable of functioning with connection to other devices. In systems where a connection does exist, the capability of electronically connecting a number of automated slide stainers or automated sample processing systems or label printers 200, may be provided. There may be one or more separate full function computers connected. These may be connected through a hub 193. There may be a multitasked central processing unit resource on either the automated sample processing apparatus or the computer or there may be a number of central processing units that are configured to avoid using or implementing a multitasked central processing unit resource relative to the process operations in order to maintain full independence or perhaps even autonomous operation. The connection, whether for input or other operation may also be a remote link (including ability to he made remote such as in detachable memory) such as an internet connection element, a telephone line connection element, a wireless communication element, or even a detachable memory element. In one example, connection among perhaps a number of process systems and perhaps a number of computers, such as workstations and a server (the latter residing either separately or as part of a workstation), may be achieved by use of a local area network (LAN), such as a group of computers and associated devices that share a common communications line or perhaps wireless link and may even share the resources of a single processor, memory, or server within a small geographic area (for example, within an office building or complex). A local area network for this type of system may also include features such as but not limited to: an Ethernet element, a token ring element, an arcnet element, a fiber distributed data interface element, an industry specification protocol, a bluetooth-based element, a telecommunications industry specification using a frequency band of 2.45 GHz, a communication specification applying an IEEE 802 standard, a frequency hop communication specification, a shared common link element, a transmission control protocol/internet protocol communication element, a packetized information protocol, a shared protocol, a proprietary protocol, and even a layered protocol exchange system. By providing an electronic connection between various resources, the local area network such as the stainer network 183 (a network dedicated to only the stainer or perhaps sample processing resources for integrity, security, and other purposes) in one embodiment may transmit an electronic memory address to achieve access to the appropriate information.

As mentioned, connection may be accomplished over internet connections or over local area network connections. Each sample processing apparatus in a network may be individually controlled, in some examples, by a PC attached with, internal to, or otherwise provided. Data sharing between sample processing systems and the system manager may be performed to allow identification, tracking, and status of sample batches, reagents, and other agents and components of the sample processing system. A determination of which system has which reagents, reagent type, slides and protocols may he performed. Log files for each processing sequence, protocol, or slide can be generated for monitoring processing status. A centralized database may be maintained to store this information. Database maintenance (including but not limited to purge, compact, back-up, database/list, and archive functions) and system diagnostics (including but not limited to exercising active system components to verify proper operation and assisting in troubleshooting efforts) may be accomplished manually or automatically.

Examples of the methods and techniques disclosed herein may be implemented as instructions to be carried out by a sample processing controller including at least one processor. As used herein, the term "processor" may include an electric circuit that performs a logic operation on an input or inputs. For example, such a processor may include one or more integrated circuits, microchips, microcontrollers, microprocessors, all or part of a central processing unit (CPU), graphics processing unit (GPU), digital signal processors (DSP), field-programmable gate array (FPGA) or other circuit suitable for executing instructions or performing logic operations. The at least one processor may be configured to perform an action if it is provided with access to, is programmed with, includes, or is otherwise made capable carrying out instructions for performing the action. The at least one processor may be provided with such instructions either directly through information permanently or temporarily maintained in the processor, or through instructions accessed by or provided to the processor. Instructions provided to the processor may be provided in the form of a computer program comprising instructions tangibly embodied on an information carrier, e.g., in a machine-readable storage device, or any tangible computer-readable medium. A computer program may be written in any form of programming language, including compiled or interpreted languages, and it can be deployed in any form, including as a standalone program or as one or more modules, components, subroutines, or other unit suitable for use in a computing environment. The at least one processor may include specialized hardware, general hardware, or a combination of both to execute related instructions. The processor may also include an integrated communications interface, or a communications Interface may be included separate and apart from the processor. The at least one processor may be configured to perform a specified function through a connection to a memory location or storage device in which instructions to perform that function are stored.

## Claims

1. An automated staining apparatus (1, 201) comprising:
a reagent section (2) configured to contain a plurality of reagent containers (3);
a slide section (5) configured to contain a plurality of sample carriers (7);
a robotic element (20) configured to perform sample processing operations; and
a sample processing controller (100), **characterized in that** the sample processing controller (100) is configured to operate the automated staining apparatus (1, 201) in a virtual split run mode dividing the automated staining apparatus (1, 201) into multiple virtual processing apparatuses (301) that each operates as stand-alone processing apparatus and is configured to:
control the robotic element (20) according to a processing protocol splitting the plurality of reagent containers (3) and the plurality of sample carriers (7) into:
- a first portion of the plurality of reagent containers (3) designated as a first reagent container group known (103) to produce valid results;
- a first portion of the plurality of sample carriers (7) designated as a first sample carrier group (107) corresponding to the first reagent container group (103);
- a second portion of the plurality of reagent containers (3) designated as a second reagent container group (103) of unknown validity;
- a second portion of the plurality of sample carriers (7) designated as a second sample carrier group (107)corresponding to the second reagent container group (103); wherein
the sample processing controller (100) controls the robotic element (20) to perform processing steps according to the processing protocol on the first sample carrier group (107) and second sample carrier group (107) using reagents obtained from corresponding reagent groups (103) and not from non-corresponding reagent groups (103), enabling comparing results of the processing protocol carried out on the first sample carrier group (107) using reagents obtained from the first plurality of reagent containers (103) to results of the processing protocol carried out on the second sample carrier group (107) using reagents obtained from the second plurality of reagent containers (103) and validating the second reagent container group (103) based on the similarity of the compared results.

2. The apparatus (1, 201) of claim 1, further comprising:
at least one additional portion of the plurality of reagent containers (7) designated as an additional reagent container group (103),
at least one additional portion of the plurality of sample carriers (7) designated as an additional sample carrier group (107) corresponding to the at least one additional reagent container group (103);
wherein the sample processing controller (100) controls the robotic element (20) to perform processing steps according to the processing protocol on the at least one additional sample carrier group (107) using reagents obtained from corresponding reagent groups (103) and not from non-corresponding reagent groups (103) enabling comparison of the results and validation of the second reagent container group (107) and the additional reagent container group (107).

3. The apparatus (1, 201) of any of claims 1 or 2, wherein the first sample carrier group (107) and the second sample carrier group (107) correspond to a universal portion of the plurality of reagent containers (3) designated as a universal reagent group (133).

4. The apparatus (1, 201) of any of claims 1-3, wherein the sample processing controller (100) is further configured to establish a network connection and/or to receive the processing protocol from a server via the network connection, wherein the controller (100) is preferably further configured to designate the first sample carrier group (107), the second sample carrier group (207), the first reagent container group (103), and the second reagent container group (103) according to a grouping plan received from a server via the network connection or received via user input.

5. The apparatus (1, 201) of any of claims 1-4 wherein the sample controller (100) controls the robotic element (20) to continue performing processing steps on the first group of sample carriers (107) during the insertion or removal of sample carriers (7) of the second group of sample carriers (107) and/or during the insertion or removal of reagent containers from the second group of reagent containers (103).

6. The apparatus (1, 201) of any of claims 1-5, wherein the sample processing control system (100) is further configured to:
designate a third portion of the plurality of reagent containers (7) as a third reagent container group (107), and
designate a sample carrier (7) newly introduced to the sample processing apparatus (1, 201) as a third sample carrier group (107) corresponding to the third reagent group (103).

7. A method of performing automatic sample processing operations on an automatic sample processing (1, 201) apparatus including a plurality of sample carriers (7), a plurality of reagent containers (3), and a robotic processing element (20), the method comprising;
designating at least one group (107) from among the plurality of sample carriers (7) as corresponding to at least one group (103) from among the plurality of reagent containers (7) according to a grouping plan; and
controlling the robotic processing element (20) to perform processing steps according to a processing protocol on the at least one group of the plurality of sample carriers (7) using reagents obtained from the corresponding at least one group of the plurality of reagent (3) containers and not from a non-corresponding group of reagent containers;
**characterized in that** the automatic sample processing apparatus is operated in a virtual split run mode dividing it into multiple virtual processing apparatuses (301) that each operate as stand-alone processing apparatus,
wherein the plurality of the regent containers (3) and the plurality of sample carriers (7) are split into a first group of sample carriers (107) that corresponds to a first group of reagent containers (103) known to produce valid results and a second group of sample carriers (107) that corresponds to a second group of reagent containers (103) of unknown validity, the method further comprising:
comparing results of the processing protocol carried out on the first group of sample carriers (107) using reagents obtained from the first group of reagent containers (103) and not from the second group of reagent containers (103) to results of the processing protocol carried out on the second group of sample carriers (107) using reagents obtained from the second group of reagent containers (103) and not from the first group of reagent containers (103) and validating the second group of reagent containers (103) based on the similarity of the compared results.

8. The method of claim 7, wherein the at least one group of the plurality of sample carriers (107) corresponding to the at least one group of the plurality of reagent containers (103) includes a plurality of sample carrier groups (107), each corresponding to at least one of a plurality of reagent container (103) groups included in the at least one group of the plurality of reagent containers (103).

9. The method of claims 7 or 8, wherein the plurality of sample carrier (107) groups are each designated as corresponding to a universal reagent container group (133) from among the plurality of reagent container groups (103).

10. The method of any of claims 7-9, wherein the second group of reagent containers (103) is newly introduced to the sample processing apparatus (1, 201).

11. The method of any of claims 7-10, further comprising controlling the robotic element (20) to continue performing processing steps on a first group of sample carriers (107) from among the plurality of sample carrier groups (107) during the insertion or removal of a second group of sample carriers (107) from among the plurality of sample carrier groups (107) or during the insertion or removal of a group of non-corresponding reagent containers (103) from among the plurality of reagent container groups (103).

12. The apparatus (1, 201) of any one of claims 1 to 6,
wherein
- the first portion of the plurality of reagent containers (103) and the second portion of the plurality of reagent containers (103) have at least one sample carrier (3) in common, or
- the first portion of the plurality of reagent containers (103) and the second portion of the plurality of reagent containers (103) have no sample carriers (3) in common.

13. The apparatus (1, 201) of any one of claims 1 to 6 and 12, wherein;
- the first portion of the plurality of sample carriers (107) and the second portion of the plurality of sample carriers (107) have no sample carriers (7) in common, or
- the first portion of the plurality of sample carriers (107) and the second portion of the plurality of sample carriers (107) have at least one sample carrier (7) in common.

14. The apparatus (1, 201) of any one of claims 1 to 6, 12 and 13, wherein:
- sample carriers (7) of a first sample carrier group (107) are located in a same area of the apparatus (1, 201), and sample carriers (7) of a second sample carrier group (107) are located in a same area of the apparatus, or
- sample carriers of a first sample carrier group are not located in a same area of the apparatus, and sample carriers of a second sample carrier group are not located in a same area of the apparatus.

15. The apparatus (1, 201) of any one of claims 1 to 6, and 12 to 14, wherein the first sample carrier group (107) and the second sample carrier group (107) each include only one sample carrier (7).

## Patentansprüche

1. Automatisierte Färbevorrichtung (1, 201), umfassend:
einen Reagenzabschnitt (2), der konfiguriert ist, um eine Vielzahl von Reagenzbehältern (3) aufzunehmen,
einen Objektträgerabschnitt (5), der konfiguriert ist, um eine Vielzahl von Probenträgern (7) aufzunehmen,
ein Roboterelement (20), das konfiguriert ist, um Probenverarbeitungsvorgänge durchzuführen, und
eine Probenverarbeitungssteuerung (100), **dadurch gekennzeichnet, dass** die Probenverarbeitungssteuerung (100) konfiguriert ist, um die automatisierte Färbevorrichtung (1, 201) in einem virtuellen Split-Laufmodus zu betreiben, der die automatisierte Färbevorrichtung (1, 201) in mehrere virtuelle Verarbeitungsvorrichtungen (301) unterteilt, von denen jede als eigenständige Verarbeitungsvorrichtung arbeitet und dazu konfiguriert ist,
das Roboterelement (20) gemäß einem Verarbeitungsprotokoll zu steuern, welches die Vielzahl der Reagenzbehälter (3) und die Vielzahl der Probenträger (7) aufteilt in:
- einen ersten Teilbereich der Vielzahl von Reagenzbehältern (3), der als eine erste Reagenzbehältergruppe bezeichnet ist, von der bekannt ist (103), dass sie gültige Ergebnisse erzeugt,
- einen ersten Teilbereich der Vielzahl von Probenträgern (7), der als eine erste Probenträgergruppe (107) bezeichnet ist, welche der ersten Reagenzbehältergruppe (103) entspricht,
- einen zweiten Teilbereich der Vielzahl von Reagenzbehältern (3), der als eine zweite Reagenzbehältergruppe (103) mit unbekannter Aussagekraft bezeichnet ist,
- einen zweiten Teilbereich der Vielzahl von Probenträgern (7), der als eine zweite Probenträgergruppe (107) bezeichnet ist, welche der zweiten Reagenzbehältergruppe (103) entspricht, wobei
die Probenverarbeitungssteuerung (100) das Roboterelement (20) steuert, um Verarbeitungsschritte gemäß dem Verarbeitungsprotokoll an der ersten Probenträgergruppe (107) und der zweiten Probenträgergruppe (107) unter Verwendung von Reagenzien durchzuführen, welche aus entsprechenden Reagenzgruppen (103) und nicht aus nicht korrespondierenden Reagenzgruppen (103) erhalten wurden, wodurch es ermöglicht wird, die Ergebnisse des Verarbeitungsprotokolls, das an der ersten Probenträgergruppe (107) unter Verwendung von Reagenzien, die aus der ersten Vielzahl von Reagenzbehältern (103) erhalten wurden, ausgeführt wurde, mit Ergebnissen des Verarbeitungsprotokolls, das an der zweiten Probenträgergruppe (107) unter Verwendung von Reagenzien, die aus der zweiten Vielzahl von Reagenzbehältern (103) erhalten wurden, durchgeführt wurde, zu vergleichen und die zweite Reagenzbehältergruppe (103) basierend auf der Ähnlichkeit der verglichenen Ergebnisse zu validieren.

2. Vorrichtung (1, 201) nach Anspruch 1, ferner umfassend:
mindestens einen zusätzlichen Teilbereich der Vielzahl von Reagenzbehältern (7), der als zusätzliche Reagenzbehältergruppe (103) bezeichnet ist,
mindestens einen zusätzlichen Teilbereich der Vielzahl von Probenträgern (7), der als zusätzliche Probenträgergruppe (107) bezeichnet ist, welche der mindestens einen zusätzlichen Reagenzbehältergruppe (103) entspricht,
wobei die Probenverarbeitungssteuerung (100) das Roboterelement (20) steuert, um Verarbeitungsschritte gemäß dem Verarbeitungsprotokoll an der mindestens einen zusätzlichen Probenträgergruppe (107) unter Verwendung von Reagenzien durchzuführen, die aus entsprechenden Reagenzgruppen (103) und nicht aus nicht korrespondierenden Reagenzgruppen (103) erhalten wurden, was den Vergleich der Ergebnisse und die Validierung der zweiten Reagenzbehältergruppe (107) und der zusätzlichen Reagenzbehältergruppe (107) ermöglicht.

3. Vorrichtung (1, 201) nach einem der Ansprüche 1 oder 2, wobei die erste Probenträgergruppe (107) und die zweite Probenträgergruppe (107) einem universellen Teilbereich der Vielzahl von Reagenzbehältern (3) entsprechen, der als universelle Reagenzgruppe (133) bezeichnet ist.

4. Vorrichtung (1, 201) nach einem der Ansprüche 1-3, wobei die Probenverarbeitungssteuerung (100) ferner konfiguriert ist, um eine Netzwerkverbindung herzustellen und/oder das Verarbeitungsprotokoll von einem Server über die Netzwerkverbindung zu empfangen, wobei die Steuerung (100) vorzugsweise weiterhin konfiguriert ist, um die erste Probenträgergruppe (107), die zweite Probenträgergruppe (207), die erste Reagenzbehältergruppe (103) und die zweite Reagenzbehältergruppe (103) gemäß einem Gruppierungsplan zu bezeichnen, welcher von einem Server über die Netzwerkverbindung empfangen oder über eine Benutzereingabe empfangen wird.

5. Vorrichtung (1, 201) nach einem der Ansprüche 1-4, wobei die Probensteuerung (100) das Roboterelement (20) steuert, um die Verarbeitungsschritte an der ersten Gruppe von Probenträgern (107) während des Einsetzens oder Entfernens von Probenträgern (7) der zweiten Gruppe von Probenträgern (107) und/oder während des Einsetzens oder Entfernens von Reagenzbehältern aus der zweiten Gruppe von Reagenzbehältern (103) weiter durchzuführen.

6. Vorrichtung (1, 201) nach einem der Ansprüche 1-5, wobei das Probenverarbeitungssteuerungssystem (100) ferner konfiguriert ist, um:
einen dritten Teilbereich der Vielzahl von Reagenzbehältern (7) als dritte Reagenzbehältergruppe (107) zu bezeichnen und
einen Probenträger (7) zu bezeichnen, der neu als eine dritte Probenträgergruppe (107), die der dritten Reagenzgruppe (103) entspricht, in die Probenbearbeitungsvorrichtung (1, 201) eingeführt wurde.

7. Verfahren zum Durchführen automatischer Probenverarbeitungsvorgänge an einer automatischen Probenverarbeitungsvorrichtung (1, 201), die eine Vielzahl von Probenträgern (7), eine Vielzahl von Reagenzbehältern (3) und ein robotisches Verarbeitungselement (20) beinhaltet, wobei das Verfahren umfasst:
Bestimmen mindestens einer Gruppe (107) aus der Vielzahl von Probenträgern (7) als mindestens einer Gruppe (103) aus der Vielzahl von Reagenzbehältern (7) gemäß einem Gruppierungsplan entsprechend und
Steuern des robotischen Verarbeitungselements (20), um Verarbeitungsschritte gemäß einem Verarbeitungsprotokoll an der mindestens einen Gruppe der Vielzahl von Probenträgern (7) unter Verwendung von Reagenzien durchzuführen, welche aus der entsprechenden, mindestens einen Gruppe der Vielzahl von Reagenzbehältern (3) und nicht aus einer nicht korrespondierenden Gruppe von Reagenzbehältern erhalten wurden,
**dadurch gekennzeichnet, dass** die automatische Probenverarbeitungsvorrichtung in einem virtuellen Split-Laufmodus betrieben wird, welcher sie in mehrere virtuelle Verarbeitungsvorrichtungen (301) unterteilt, von denen jede als eigenständige Verarbeitungsvorrichtung arbeitet,
wobei die Vielzahl der Reagenzbehälter (3) und die Vielzahl der Probenträger (7) in eine erste Gruppe von Probenträgern (107), die einer ersten Gruppe von Reagenzbehältern (103) entspricht, von denen bekannt ist, dass sie gültige Ergebnisse liefern, und eine zweite Gruppe von Probenträgern (107), die einer zweiten Gruppe von Reagenzbehältern (103) mit unbekannter Aussagekraft entspricht, unterteilt sind, wobei das Verfahren ferner umfasst:
Vergleichen der Ergebnisse des Verarbeitungsprotokolls, das an der ersten Gruppe von Probenträgern (107) unter Verwendung von Reagenzien, die aus der ersten Gruppe von Reagenzbehältern (103) und nicht aus der zweiten Gruppe von Reagenzbehältern (103) erhalten wurden, mit Ergebnissen des Verarbeitungsprotokolls, das an der zweiten Gruppe von Probenträgern (107) unter Verwendung von Reagenzien, die aus der zweiten Gruppe von Reagenzbehältern (103) und nicht aus der ersten Gruppe von Reagenzbehältern (103) erhalten wurden, durchgeführt wurde, und Validieren der zweiten Gruppe von Reagenzbehältern (103) basierend auf der Ähnlichkeit der verglichenen Ergebnisse.

8. Verfahren nach Anspruch 7, wobei die mindestens eine Gruppe der Vielzahl von Probenträgern (107), die der mindestens einen Gruppe der Vielzahl von Reagenzbehältern (103) entspricht, eine Vielzahl von Probenträgergruppen (107) beinhaltet, die jeweils mindestens einer von einer Vielzahl von Gruppen (103) von Reagenzbehältern entsprechen, die in der mindestens einen Gruppe der Vielzahl von Reagenzbehältern (103) enthalten sind.

9. Verfahren nach Anspruch 7 oder 8, wobei die Vielzahl von Gruppen von Probenträgern (107) jeweils als entsprechend einer universellen Reagenzbehältergruppe (133) aus der Vielzahl von Reagenzbehältergruppen (103) bezeichnet werden.

10. Verfahren nach einem der Ansprüche 7-9, wobei die zweite Gruppe von Reagenzbehältern (103) neu in die Probenbearbeitungsvorrichtung (1, 201) eingeführt wird.

11. Verfahren nach einem der Ansprüche 7-10, ferner umfassend das Steuern des Roboterelements (20), um das Durchführen von Verarbeitungsschritten an einer ersten Gruppe von Probenträgern (107) aus der Vielzahl von Probenträgergruppen (107) während des Einsetzens oder Entfernens einer zweiten Gruppe von Probenträgern (107) aus der Vielzahl von Probenträgergruppen (107) oder während des Einsetzens oder Entfernens einer Gruppe von nicht korrespondierenden Reagenzbehältern (103) aus der Vielzahl von Reagenzbehältergruppen (103) fortzusetzen.

12. Vorrichtung (1, 201) nach einem der Ansprüche 1-6,
wobei
- der erste Teilbereich der Vielzahl von Reagenzbehältern (103) und der zweite Teilbereich der Vielzahl von Reagenzbehältern (103) mindestens einen gemeinsamen Probenträger (3) aufweisen oder
- der erste Teilbereich der Vielzahl von Reagenzbehältern (103) und der zweite Abschnitt der Vielzahl von Reagenzbehältern (103) keine gemeinsamen Probenträger (3) aufweisen.

13. Vorrichtung (1, 201) nach einem der Ansprüche 1-6, wobei
- der erste Teilbereich der Vielzahl von Probenträgern (107) und der zweite Teilbereich der Vielzahl von Probenträgern (107) keine gemeinsamen Probenträger (7) aufweisen oder
- der erste Teilbereich der Vielzahl von Probenträgern (107) und der zweite Teilbereich der Vielzahl von Probenträgern (107) mindestens einen gemeinsamen Probenträger (7) haben.

14. Vorrichtung (1, 201) nach einem der Ansprüche 1-6,12 und 13, wobei
- Probenträger (7) einer ersten Probenträgergruppe (107) in einem gleichen Bereich der Vorrichtung (1, 201) angeordnet sind und Probenträger (7) einer zweiten Probenträgergruppe (107) in einem gleichen Bereich der Vorrichtung angeordnet sind, oder
- Probenträger einer ersten Probenträgergruppe nicht in einem gleichen Bereich der Vorrichtung angeordnet sind, und Probenträger einer zweiten Probenträgergruppe nicht in einem gleichen Bereich der Vorrichtung angeordnet sind.

15. Vorrichtung (1, 201) nach einem der Ansprüche 1 bis 6 und 12 bis 14, wobei die erste Probenträgergruppe (107) und die zweite Probenträgergruppe (107) jeweils nur einen Probenträger (7) beinhalten.

## Revendications

1. Dispositif de coloration automatisé (1, 201) comprenant :
une section de réactif (2) configurée pour contenir une pluralité de conteneurs de réactifs (3) ;
une section coulissante (5) configurée pour contenir une pluralité de porte-échantillons (7) ;
un élément robotique (20) configuré pour effectuer des opérations de traitement d'échantillons ; et
un contrôleur de traitement d'échantillons (100), **caractérisé en ce que** le contrôleur de traitement d'échantillons (100) est configuré pour exploiter le dispositif de coloration automatisé (1, 201) dans un mode d'exécution divisé virtuel divisant le dispositif de coloration automatisé (1, 201) en plusieurs dispositifs de traitement virtuels (301) qui fonctionnent chacun en tant que dispositifs de traitement autonomes et sont configurés pour :
contrôler l'élément robotique (20) selon un protocole de traitement divisant la pluralité de conteneurs de réactifs (3) et la pluralité de porte-échantillons (7) en :
- une première partie de la pluralité de conteneurs de réactif (3) désignée en tant qu'un premier groupe de conteneurs de réactifs connu (103) pour produire des résultats valides ;
- une première partie de la pluralité de porte-échantillons (7) désignée comme un premier groupe de porte-échantillons (107) correspondant au premier groupe de conteneurs de réactifs (103) ;
- une deuxième partie de la pluralité de conteneurs de réactifs (3) désignée en tant qu'un deuxième groupe de conteneurs de réactifs identifié (103) de validité inconnue ;
- une deuxième partie de la pluralité de porte-échantillons (7) désignée comme un deuxième groupe de porte-échantillons (107) correspondant au deuxième groupe de conteneurs de réactifs (103) ; dans lequel
le contrôleur de traitement d'échantillons (100) contrôle l'élément robotique (20) pour effectuer des étapes de traitement selon le protocole de traitement sur le premier groupe de porte-échantillons (107) et le deuxième groupe de porte-échantillons (107) en utilisant des réactifs obtenus à partir de groupes de réactifs correspondants (103) et non à partir de groupes de réactifs non correspondants (103), autorisant une comparaison de résultats du protocole de traitement effectué sur le premier groupe de porte-échantillons (107) en utilisant des réactifs obtenus à partir de la première pluralité de conteneurs de réactifs (103) à des résultats du protocole de traitement effectué sur le deuxième groupe de porte-échantillons (107) en utilisant des réactifs obtenus à partir de la deuxième pluralité de conteneurs de réactifs (103) et une validation du deuxième groupe de conteneurs de réactifs (103) selon la similarité des résultats comparés.

2. Le dispositif (1, 201) de la revendication 1, comprenant en outre :
au moins une partie supplémentaire de la pluralité de conteneurs de réactifs (7) désignée en tant qu'un groupe de conteneurs de réactifs supplémentaire (103),
au moins une partie supplémentaire de la pluralité de porte-échantillons (7) désignée comme un groupe de porte-échantillons supplémentaire (107) correspondant à l'au moins un groupe de conteneurs de réactifs supplémentaire (103) ;
dans lequel le contrôleur de traitement d'échantillons (100) contrôle l'élément robotique (20) pour effectuer des étapes de traitement selon le protocole de traitement sur l'au moins un groupe de porte-échantillons supplémentaire (107) en utilisant des réactifs obtenus à partir de groupes de réactifs correspondants (103) et non à partir de groupes de réactifs non correspondants (103) autorisant une comparaison des résultats et une validation du deuxième groupe de conteneurs de réactifs (107) et du groupe de conteneurs de réactifs supplémentaire (107).

3. Le dispositif (1, 201) de l'une quelconque des revendications 1 et 2, dans lequel le premier groupe de porte-échantillons
(107) et le deuxième groupe de porte-échantillons (107) correspondent à une partie universelle de la pluralité de conteneurs de réactifs (3) désignée en tant qu'un groupe de réactifs universel (133).

4. Le dispositif (1, 201) de l'une quelconque des revendications 1 à 3, dans lequel le contrôleur de traitement d'échantillons (100) est configuré en outre pour établir une connexion de réseau et/ou pour recevoir le protocole de traitement d'un serveur via la connexion de réseau, dans lequel le contrôleur (100) est de préférence configuré en outre pour désigner le premier groupe de porte-échantillons (107), le deuxième groupe de porte-échantillons (207, le premier groupe de conteneurs de réactifs (103) et le deuxième groupe de conteneurs de réactifs (103) selon un plan de regroupement reçu d'un serveur via la connexion de réseau ou reçu via une entrée d'utilisateur.

5. Le dispositif (1, 201) de l'une quelconque des revendications 1 à 4 dans lequel le contrôleur d'échantillon (100) contrôle l'élément robotique (20) pour continuer à effectuer des étapes de traitement sur le premier groupe de porte-échantillons (107) pendant l'insertion ou le retrait de porte-échantillons (7) dans le/du deuxième groupe de porte-échantillons (107) et/ou pendant l'insertion ou le retrait de conteneurs de réactifs dans le/du deuxième groupe de conteneurs de réactifs (103).

6. Le dispositif (1, 201) de l'une quelconque des revendications 1 à 5, dans lequel le système de contrôle de traitement d'échantillons (100) est configuré en outre pour :
désigner une troisième partie de la pluralité de conteneurs de réactifs (7) désignée en tant qu'un troisième groupe de conteneurs de réactifs identifié (107), et
désigner un porte-échantillons (7) nouvellement introduit dans le dispositif de traitement d'échantillons (1, 201) en tant qu'un troisième groupe de porte-échantillons (107) correspondant au troisième groupe de réactifs (103).

7. Procédé pour effectuer des opérations de traitement d'échantillons automatiques sur un dispositif de traitement d'échantillons automatique (1, 201) incluant une pluralité de porte-échantillons (7), une pluralité de conteneurs de réactifs (3) et un élément de traitement robotique (20), le procédé comprenant :
une désignation d'au moins un groupe (107) parmi la pluralité de porte-échantillons (7) tel que correspondant à au moins un groupe (103) parmi la pluralité de conteneurs de réactifs (7) selon un plan de regroupement ; et
un contrôle de l'élément de traitement robotique (20) pour effectuer des étapes de traitement selon un protocole de traitement sur l'au moins un groupe de la pluralité de porte-échantillons (7) en utilisant des réactifs obtenus à partir de l'au moins un groupe correspondant de la pluralité de conteneurs de réactifs (3) et non à partir d'un groupe de conteneurs de réactifs non correspondants ;
**caractérisé en ce que** le dispositif de traitement d'échantillons automatique est exploité dans un mode d'exécution divisé virtuel le divisant en plusieurs dispositifs de traitement virtuels (301) qui fonctionnent chacun en tant que dispositifs de traitement autonomes,
dans lequel la pluralité de conteneurs de réactifs (3) et la pluralité de porte-échantillons (7) sont divisées en un premier groupe de porte-échantillons (107) qui correspond à un premier groupe de conteneurs de réactifs (103) connu pour produire des résultats valides et un deuxième groupe de porte-échantillons (107) qui correspond à un deuxième groupe de conteneurs de réactifs (103) de validité inconnue, le procédé comprenant en outre :
une comparaison de résultats du protocole de traitement effectué sur le premier groupe de porte-échantillons (107) en utilisant des réactifs obtenus à partir du premier groupe de conteneurs de réactifs (103) et non à partir du deuxième groupe de conteneurs de réactifs (103) à des résultats du protocole de traitement effectué sur le deuxième groupe de porte-échantillons (107) en utilisant des réactifs obtenus à partir du deuxième groupe de conteneurs de réactifs (103) et non à partir du premier groupe de conteneurs de réactifs (103) et validation du deuxième groupe de conteneurs de réactifs (103) selon la similarité des résultats comparés.

8. Le procédé de la revendication 7, dans lequel l'au moins un groupe de la pluralité de porte-échantillons (107) correspondant à l'au moins un groupe de la pluralité de conteneurs de réactifs (103) inclut une pluralité de groupes de porte-échantillons (107), chacun correspondant à au moins un d'une pluralité de groupes de conteneurs de réactifs (103) inclus dans l'au moins un groupe de la pluralité de conteneurs de réactifs (103) .

9. Le procédé de la revendication 7 ou 8, dans lequel la pluralité de groupes de porte-échantillons (107) sont chacun désignés comme correspondants à un groupe de conteneurs de réactifs universel (133) parmi la pluralité de groupes de conteneurs de réactifs (103).

10. Le procédé de l'une quelconque des revendications 7 à 9, dans lequel le deuxième groupe de conteneurs de réactifs (103) est nouvellement introduit dans le dispositif de traitement d'échantillons (1, 201).

11. Le procédé de l'une quelconque des revendications 7 à 10, comprenant en outre un contrôle de l'élément robotique (20) pour continuer à effectuer des étapes de traitement sur un premier groupe de porte-échantillons (107) parmi la pluralité de groupes de porte-échantillons (107) pendant l'insertion ou le retrait d'un deuxième groupe de porte-échantillons (107) à partir de la pluralité de groupes de porte-échantillons (107) ou pendant l'insertion ou le retrait d'un groupe de conteneurs de réactifs non correspondants (103) à partir de la pluralité de groupes de conteneurs de réactifs (103).

12. Le dispositif (1, 201) de l'une quelconque des revendications 1 à 6,
dans lequel
- la première partie de la pluralité de conteneurs de réactifs (103) et la deuxième partie de la pluralité de conteneurs de réactifs (103) ont au moins un porte-échantillons (3) en commun, ou
- la première partie de la pluralité de conteneurs de réactifs (103) et la deuxième partie de la pluralité de conteneurs de réactifs (103) n'ont aucun porte-échantillons (3) en commun.

13. Le dispositif (1, 201) de l'une quelconque des revendications 1 à 6 et 12, dans lequel :
- la première partie de la pluralité de porte-échantillons (107) et la deuxième partie de la pluralité de porte-échantillons (107) n'ont aucun porte-échantillons (7) en commun, ou
- la première partie de la pluralité de porte-échantillons (107) et la deuxième partie de la pluralité de porte-échantillons (107) ont au moins un porte-échantillons (7) en commun.

14. Le dispositif (1, 201) de l'une quelconque des revendications 1 à 6, 12 et 13, dans lequel :
- des porte-échantillons (7) d'un premier groupe de porte-échantillons (107) se trouvent dans une même zone du dispositif (1, 201), et des porte-échantillons (7) d'un deuxième groupe de porte-échantillons (107) se trouvent dans une même zone du dispositif, ou
- des porte-échantillons d'un premier groupe de porte-échantillons ne se trouvent dans une même zone du dispositif, et des porte-échantillons d'un deuxième groupe de porte-échantillons ne se trouvent pas dans une même zone du dispositif.

15. Le dispositif (1, 201) de l'une quelconque des revendications 1 à 6, et 12 à 14, dans lequel le premier groupe de porte-échantillons (107) et le deuxième groupe de porte-échantillons (107) incluent chacun uniquement un porte-échantillons (7).
